# FASCICULE DE BREVET EUROPEEN

(11) **EP 1 628 820 B1**
(45) Date de publication et mention de la délivrance du brevet: **03.12.2008**
(21) Numéro de dépôt: 04742681.2
(22) Date de dépôt: 07.05.2004
(51) Int. Cl.: B29C 45/18, B29C 45/17, B29B 13/06, B29C 47/10

(54) **PROCEDE DE PRODUCTION D'OBJETS EN POLYETHYLENE TEREPHTHALATE**
VERFAHREN ZUR HERSTELLUNG VON PET-GEGENSTÄNDEN
METHOD FOR THE PRODUCTION OF POLYETHYLENE TEREPHTHALATE OBJECTS

(30) Priorité: 21.05.2003 FR 0306085
(43) Date de publication de la demande: 01.03.2006
(73) Titulaire: L'AIR LIQUIDE, Société Anonyme pour l'Etude et l'Exploitation des Procédés Georges Claude, 75007 Paris (FR)
(72) Inventeur: RAMES-LANGLADE, Géraldine, F-78220 Viroflay (FR); BENJAMIN, Yves, F-57700 Hayange Marspich (FR)
(74) Mandataire: Mellul-Bendelac, Sylvie Lisette
(86) Numéro de dépôt international: PCT/FR2004/001123
(87) Numéro de publication internationale: WO 2004/103681

(56) Documents cités:
- FR-A- 1 587 500
- US-A- 4 142 040
- US-A- 4 230 819
- US-A- 5 648 032
- US-A- 5 968 429
- US-A- 6 129 873
- PATENT ABSTRACTS OF JAPAN vol. 1997, no. 03, 31 mars 1997 (1997-03-31) & JP 08 300410 A (TOYO MACH &METAL CO LTD), 19 novembre 1996 (1996-11-19)
- PATENT ABSTRACTS OF JAPAN vol. 2002, no. 09, 4 septembre 2002 (2002-09-04) & JP 2002 127185 A (OLYMPUS OPTICAL CO LTD), 8 mai 2002 (2002-05-08)
- PATENT ABSTRACTS OF JAPAN vol. 1995, no. 06, 31 juillet 1995 (1995-07-31) & JP 07 080893 A (OLYMPUS OPTICAL CO LTD), 28 mars 1995 (1995-03-28)

## Description

La présente invention concerne le domaine de la production d'objets en polyéthylène téréphthalate (PET), notamment de bouteilles pour le conditionnement de boissons telles que les eaux minérales, les boissons gazeuses, non gazeuses, non alcoolisées ou encore les huiles. En effet, le PET, en plus de ses propriétés optiques (très bonne transparence et brillance) et mécaniques (résistance aux chocs, tenue en pression interne), présente des avantages sur le plan écologique (matériaux biodégradables et possibilité de recyclage) et sur le plan commercial (poids, coût de revient, facilité de production). Ainsi, l'utilisation du PET pour les bouteilles tend à croître de façon régulière (on évaluait son utilisation à 5 millions de tonnes en 1999, on prévoit 7 millions de tonnes en 2004 et 10 millions de tonnes en 2010).

L'extrusion ou l'injection du plastique est un procédé connu qui consiste à faire fondre un polymère et alimenter en continu une tête de filière ou d'injection avec le polymère fondu pour le mettre en forme. Ce procédé met en général en oeuvre :
- une trémie d'alimentation en polymère, dans laquelle le polymère est introduit sous forme de poudre ou de granulés (en provenance d'un sécheur),
- des moyens de transport, de chauffage et de malaxage mais également de mise en pression du polymère provenant de la trémie, traditionnellement une vis sans fin chauffante,
- des moyens de mise en forme du polymère fondu (comprenant le plus couramment une tête de filière pour produire des profilés ou des films ou encore un moule pour produire des objets en 3 dimensions).

Il est connu qu'au cours de ce type de procédé, et notamment de l'étape de fusion dans la vis sans fin, certains polymères peuvent être sensibles à la présence de l'oxygène, ce dernier dégradant les propriétés finales du plastique mis en forme (jaunissement, réticulation du polymère, variation de la masse moléculaire et de la viscosité).

Or, il est un fait bien connu que le PET est un polymère qui se dégrade. Les réactions de dégradation se produisent sous l'action de la température, de l'oxygène de l'air, de l'humidité, ou encore des contraintes mécaniques. Ces réactions peuvent avoir lieu lors des différentes étapes intervenant dans la fabrication de telles bouteilles (production du PET, transformation du PET en granulés, stockage et séchage des granulés, transformation du PET en préforme puis en bouteille) mais également lors de l'utilisation de la bouteille en tant que stockage de boisson.

Les différentes études réalisées dans la littérature sur la dégradation du PET montrent que ces réactions conduisent à une diminution de la viscosité du PET, à une diminution des propriétés mécaniques, à une augmentation du taux d'acidité (signe de la dégradation du PET), au jaunissement du matériau etc ... mais également à la formation de composés organiques volatils. Ces composés organiques volatils sont, de par la composition du PET, et compte tenu des conditions opératoires utilisées, principalement l'acétaldéhyde, le formaldéhyde et le monoxyde de carbone. Ces molécules, et en particulier l'acétaldéhyde, se forment dans le PET lorsqu'il est sous forme de granulés, de préformes ou également de bouteilles, et diffusent dans le matériau jusqu'à migrer dans l'eau ou la boisson contenues dans ces bouteilles. La formation de l'acétaldéhyde à partir du PET a été décrite dans la littérature. Cette molécule se forme lors de la dégradation thermique en présence d'oxygène (dégradation thermo-oxydative) mais également en absence d'oxygène (dégradation thermique). La présence d'humidité accélère le processus de dégradation du PET et donc amplifie la formation d'acétaldéhyde. En effet, l'eau peut agir de deux façons : soit elle réagit directement avec un des sous produits de dégradation formé par dégradations thermique ou thermo-oxydative pour donner de l'acétaldéhyde, soit elle dégrade le PET en formant un acide et un alcool, ce dernier réagissant avec ce même sous produits de dégradation pour former aussi de l'acétaldéhyde. La formation du formaldéhyde, molécule également toxique, n'est pas décrite dans la littérature aussi précisément que celle de l'acétaldéhyde mais il peut être supposé que sa formation suive des chemins réactionnels similaires.

Or, on sait que la présence de l'acétaldéhyde, avec un seuil olfactif et organoleptique très bas pour l'homme (typiquement 0,01 ppb dans l'air et 20 µg/l dans l'eau), donne un goût de « plastique sucré » désagréable pour les consommateurs. Ce goût est encore plus accentué dans les eaux minérales à cause de l'absence d'agents ou de produits masquants qui se trouvent habituellement dans les boissons telles que jus de fruit, sodas, etc .... De plus, l'acétaldéhyde, exposé à l'air, est instable et conduit par oxydation ou par polymérisation à des sous-produits tels que l'acide acétique. Ainsi, indépendamment des considérations sensorielles, la toxicité de l'acétaldéhyde et des sous-produits formés, notamment l'activité cancérogène, suscite aussi une préoccupation de santé publique même si les concentrations de ces substances restent faibles.

Compte tenu du fait que quelques traces d'acétaldéhyde sont capables d'affecter les propriétés organoleptiques, la conservation des eaux minérales et de tout type de boissons dans des bouteilles en PET est donc critique. C'est pourquoi, il est indispensable de limiter la dégradation du PET afin de réduire la formation des produits de dégradation et plus particulièrement celle de l'acétaldéhyde.

Le problème que se propose de résoudre l'invention est la réduction de la formation de l'acétaldéhyde à partir du PET et plus spécifiquement lors de la mise en forme du PET en préforme. La mise en forme du granulé de PET en préforme s'effectue par injection-moulage : les granulés de PET sont fondus dans une vis d'extrusion chauffée entre environ 260 - 310°C avant d'être injectés dans le moule.

Plusieurs solutions permettant de réduire la formation d'acétaldéhyde d'une préforme de PET ont été évoquées dans la littérature.

Une première solution consiste à ajouter au PET un stabilisant. Ce stabilisant présent dans le granulé de PET va agir lors de sa transformation en préforme par injection-moulage. Ce stabilisant va permettre de réduire le taux d'acétaldéhyde formé soit en minimisant les réactions de dégradation qui ont lieu sous l'action de la température et de l'air soit en réagissant directement avec l'acétaldéhyde au fur et à mesure qu'il se forme pour le transformer.

On pourra par exemple se reporter au document US-5 922 828 qui porte sur l'utilisation d'un nouveau stabilisant de type phosphite. Ce stabilisant a comme fonction principale de détruire les sous produits de dégradation formés à partir de l'oxygène de l'air (composés de type hydro-peroxydes) et susceptibles d'accélérer ce même type de dégradation. Ainsi, la présence d'un stabilisant de type phosphite lors la préparation du PET permet de réduire les dégradations dues à l'oxygène et donc le taux d'acétaldéhyde induit par l'étape de mise en forme est également réduit.

On pourra également se reporter aux documents US 6191209 et EP 1239006 au nom de Ciba Speciality Chemistry, qui concernent l'utilisation de stabilisant pour réduire la formation d'acétaldéhyde. Ces stabilisants sont soit des copolymères d'alcool vinylique et d'éthylène, soit des molécules organiques telles que des hydroxyles d'amines, des oxydes d'amines, des nitrones etc .....

Cette première solution qui consiste en l'utilisation de stabilisants présente des inconvénients tels que le coût des produits, leur toxicité, leur mise en oeuvre qui peut être difficile car ils peuvent ne pas être miscibles au PET ou être sensibles à l'eau, leur utilisation car leur présence engendre des modifications de paramétrage au niveau du fonctionnement de la vis etc ....

Une seconde solution consiste à exposer les préformes de PET à une atmosphère de dioxyde de carbone. Cette solution est rapportée dans le document US-4 764 323 qui montre que l'exposition de préformes de PET à du dioxyde de carbone dans certaines conditions de pression et de température conduit à une réduction du taux d'acétaldéhyde formé. Les préformes de PET fabriquées sont placées dans un autoclave à une pression de 50 à 100 bars et sont soumises à un flux de vapeur de CO₂ chauffé entre 25 et 90°C. La durée du traitement est de 5 min à 10 heures selon la pression et la température utilisées. Même si cette solution donne des résultats satisfaisants en terme de réduction d'acétaldéhyde, il est difficilement concevable de mettre en pratique ce procédé discontinu en conditions industrielles dans lesquelles la production de préformes est continue et atteint environ 50000 préformes par heure.

Enfin, une troisième solution consiste à supprimer l'oxygène de l'air présent dans la zone où a lieu la transformation du PET et à remplacer cet oxygène par un gaz inerte tel que l'azote. En effet, la suppression de l'oxygène permet de réduire les dégradations du PET dues à l'oxygène et donc de réduire la formation d'acétaldéhyde induite par cette dégradation. On peut citer ici le document US-4 142 040 décrivant un procédé de transformation du PET dans lequel un gaz inerte tel que l'azote est introduit en aval de la trémie alimentant la vis d'extrusion en granulés (à la transition entre la trémie et la vis ou au sein même de la vis). Ainsi, l'atmosphère en contact avec le PET fondu à environ 300°C est appauvrie en oxygène ce qui minimise les dégradations venant de la présence d'oxygène et par conséquent la quantité d'acétaldéhyde formée. A titre d'exemple, à 300°C (température utilisée pour fondre le PET), la quantité d'acétaldéhyde mesurée dans une atmosphère contenant 0% d'oxygène est de 3,4 ppm alors qu'elle est de 20 ppm dans une atmosphère à 10% d'oxygène. Contrairement aux autres solutions proposées, cette solution est facile à mettre en oeuvre, économique et écologique.

Des essais comparatifs de dégradation de PET dans des atmosphères d'azote (M. Dzieciol et al, Journal of Applied Polymer Science, 77, 1894 (2000)) et d'air (M. Dzieciol et al, Journal of Applied Polymer Science, 69, 2377 (1998)) ont montré que l'utilisation d'azote permet de réduire d'une part le taux d'acétaldéhyde mais également le taux de formaldéhyde ainsi que le taux de monoxyde de carbone.

Cette solution d'injection d'azote se révèle donc très intéressante mais insuffisante pour faire descendre la teneur en acétaldéhyde mesurée dans la préforme en deçà de 2 ppm comme le prévoient des normes alimentaires en cours d'élaboration par la profession, voire même en deçà de 1.5 ppm dans la durée.

Le document US-A-6129873 décrit un procédé selon le préambule de la revendication 1.

Le problème que se propose de résoudre l'invention est alors la réduction de la formation de l'acétaldéhyde à partir du PET et plus spécifiquement lors de la mise en forme du PET en préforme dans des proportions telles que la teneur en acétaldéhyde dans les préformes puisse être inférieure à 1.5 ppm.

Selon l'invention, on injecte un gaz inerte, tel que l'azote, préalablement pré-chauffé à une température d'au moins 170°C, en aval de la trémie d'alimentation préférentiellement dans la zone d'alimentation en granulés de la vis d'extrusion (i.e sensiblement dans la zone de transition entre trémie et vis) ou encore au sein même de la vis d'extrusion.

La borne à 170 °C a été choisie en tenant compte du fait que les granulés en amont de la trémie ressortent du sécheur à une température voisine de 180 °C.

Dans le cas de l'injection dans la zone d'alimentation en granulés de la vis d'extrusion, l'invention permet la création d'une zone exempte non seulement d'oxygène mais également d'humidité. Le PET, avant d'être introduit dans la vis d'extrusion et d'être porté à l'état fondu, n'est donc ni en contact avec l'oxygène ni avec l'humidité. Il a été montré que l'injection d'azote à température ambiante permet de réduire la formation d'acétaldéhyde en limitant les réactions de dégradation dues à la présence d'oxygène. L'injection d'azote chaud devrait donc permettre de limiter les problèmes de dégradation qui sont liés à la présence d'oxygène mais également ceux liés à la présence d'humidité, comme expliqué précédemment.

De plus, l'utilisation d'azote chaud devrait également permettre d'augmenter la température dés granulés de PET avant leur entrée dans la vis sans détérioration de celui-ci, ce qui diminuera la quantité d'énergie à apporter lors de la plastification, énergie apportée pour partie par contrainte mécanique.

En limitant à la fois les dégradations du PET dues à l'oxygène, celles dues à l'humidité, et celles dues aux contraintes mécaniques, la réduction de la formation d'acétaldéhyde devrait être d'autant plus élevée.

C'est ce qui sera démontré ci-dessous plus en détails par des résultats d'expérimentation.

Par rapport aux solutions existantes, l'injection d'un gaz inerte chaud présente les avantages suivants :
- La solution reste moins onéreuse que l'utilisation de stabilisants ou l'exposition au dioxyde de carbone même si l'on prend en compte le coût de l'énergie nécessaire pour pré-chauffer le gaz,
- Elle est facile à mettre en oeuvre,
- Elle n'engendre pas la formation de sous produits toxiques,
- Elle est plus efficace en terme de réduction d'acétaldéhyde puisqu'elle permet de réduire les réactions de formation d'acétaldéhyde dues à l'oxygène, celles liées à la présence d'humidité, ou encore aux contraintes

L'invention concerne alors un procédé de production d'objets en polyéthylène téréphthalate (PET), notamment de préformes pour le conditionnement de boissons, dans lequel on dispose :
- d'une trémie d'alimentation en granulés de polymère en provenance d'un sécheur,
- de moyens de chauffage, de déplacement, et de mise en pression du polymère, tels une vis sans fin chauffante,
- de moyens de mise en forme du polymère fondu,
et où l'on procède à l'injection d'un gaz inerte en une localisation située en une ou plusieurs des localisation suivantes :
- au niveau du sécheur ;
- au niveau de la trémie ;
- en aval de la trémie ;
le gaz étant préchauffé avant son injection en ladite localisation, à une température d'au moins 170°C, préférentiellement dans la gamme de température allant de 170 °C à 250 °C.

Le procédé selon l'invention pourra par ailleurs adopter l'un ou plusieurs des caractéristiques suivantes :
- on procède à la dite injection de gaz dans la zone d'alimentation en polymère desdits moyens de chauffage, déplacement et mise en pression i.e sensiblement dans la zone de transition entre la trémie et lesdits moyens de chauffage, déplacement et mise en pression.
- on procède à la dite injection de gaz au sein même desdits moyens de chauffage, déplacement et mise en pression, dans la zone dite de fusion-plastification.
- l'injection de gaz est réalisée avec un débit compris entre 5 et 20 Nm³/h.

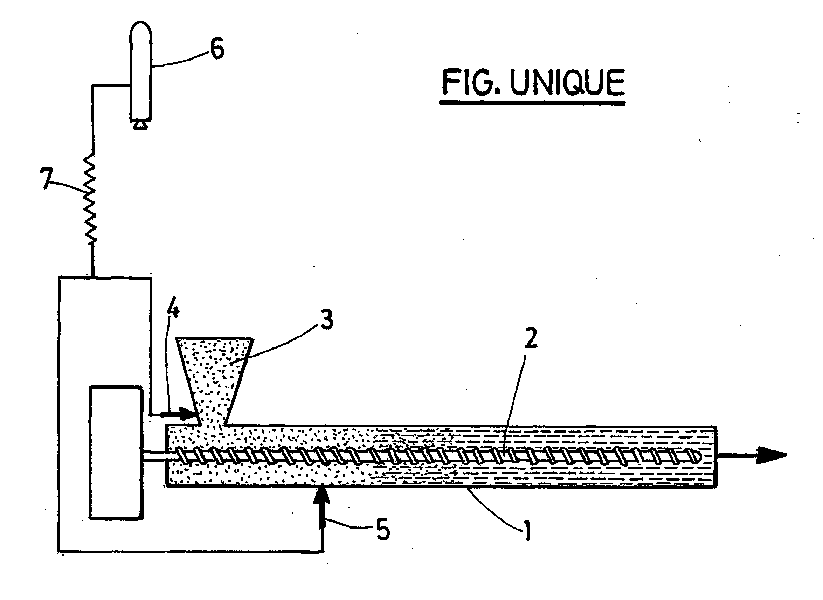

D'autres caractéristiques et avantages ressortiront de la description suivante, donnée uniquement à titre d'exemple et faite en référence à la figure unique annexée qui est une vue schématique d'un équipement conforme à l'invention.

On reconnaît sur la figure l'extrudeuse 1, munie d'une vis 2, alimentée en granulés de polymères au travers de la trémie 3. On notera que l'on a représenté sur la figure une trémie traditionnelle de forme tronconique (la plus couramment pratiquée) mais il est à noter que sur certaines installations industrielles la vis est alimentée en polymère au travers d'une « trémie » adoptant la forme toute simple d'une canalisation ou colonne, qui bien sur ne doit pas être considérée comme sortant du cadre de la présente invention.

On a illustré sur la figure un mode de réalisation de l'invention selon lequel on procède à l'injection d'un gaz inerte pré-chauffé en aval de la trémie, en deux localisations prises seules ou en combinaison :
- l'injection 4 dans la zone de transition entre trémie et extrudeuse ;
- l'injection 5 dans la portion amont de la vis.

Comme il apparaîtra clairement à l'homme du métier, l'injection devra se faire préférentiellement en une localisation où les granulés sont encore solides, or on sait qu'une telle vis comprend typiquement trois zones :
- la zone d'alimentation de la vis en granulés (ils y sont incontestablement solides) ;
- la zone de fusion-plastification où coexistent des granulés solides et fondus ;
- la zone de pompage (où les granulés sont fondus) qui met en pression le polymère pour qu'il puisse franchir la filière.

Le gaz provient d'une source 6 et transite avant injection par un moyen de préchauffage 7, par exemple une résistance chauffante ou encore une canalisation entourée d'un ruban chauffant.

On conçoit que l'on s'efforcera de positionner le moyen de préchauffage aussi proche que possible du ou des points d'injection.

Comme démontré ci-dessous par des exemples de mise en oeuvre, il a été obtenu d'excellents résultats grâce à une installation telle que celle illustrée sur cette figure, sur une presse à injection Husky de 610 kg/h (référence : P100/110 E 120).

Cette presse permet de fabriquer des préformes de bouteilles en PET. Les granulés de PET, séchés préalablement à l'air pendant 6h à environ 170°C, sont introduits directement (au travers d'une « trémie rectiligne » comme signalé précédemment) dans la vis d'extrusion via une canalisation étanche. Les granulés, introduits dans une vis d'Archimède, sont portés à des températures comprises entre 260 et 310°C selon la zone de la vis. Le PET à l'état fondu est ensuite injecté dans une presse permettant de fabriquer 48 préformes.

On a mis en oeuvre pour ces essais une seule injection d'azote (en position 4), pour cela le conduit d'alimentation de la vis en granulés a été équipé d'un injecteur de gaz tel que celui décrit dans le document WO 02/22342 au nom de la Demanderesse. Cet injecteur permet une injection d'azote perpendiculaire au flux de granulés, laminaire et homogène dans le conduit d'alimentation. L'injecteur a également été équipé d'un thermocouple pour mesurer la température du gaz au niveau de l'injection.

Le gaz injecté avait été au préalable préchauffé à l'aide d'une bande chauffante enroulée autour de la canalisation du gaz connectée à l'injecteur.

Le débit d'azote, d'une pureté d'au moins égale à 99,9%, était contrôlé via un débitmètre.

Le taux d'acétaldéhyde de la préforme d'une même position dans le moule a été déterminé par chromatographie en phase gazeuse, technique habituellement utilisée dans cette application.

Les résultats obtenus dans de telles conditions opératoires sont rapportés dans le tableau ci-dessous, qui montre le taux d'acétaldéhyde obtenu en fonction de chaque condition opératoire. Il est à noter que le débit de gaz n'est pas constant dans le tableau, en effet il a du être diminué afin de pouvoir atteindre des températures de l'ordre de 170°C.

On a d'autre part procédé à un ajout de stabilisants, en position avale de l'injection d'azote, pour certains essais.

Les résultats démontrent les points suivants :
- l'injection d'azote permet d'obtenir un taux d'acétaldéhyde plus faible que celui obtenu sans injection d'azote.
- l'exemple en ligne N°3 dans le tableau illustre les résultats comparatifs obtenus à l'aide de gaz non préchauffé (en effet la zone en question est naturellement à température supérieure à la température ambiante, le gaz y a été mesuré à 40 °C) et on le constate ils sont insuffisants et clairement moins favorables que lorsque l'on préchauffe le gaz.
- l'injection de gaz chaud diminue le taux d'acétaldéhyde formé et le taux d'acétaldéhyde est d'autant plus faible que la température du gaz est élevée,
- à 170°C, sous azote, la réduction de l'acétaldéhyde est de 46% par rapport à l'air,
- l'utilisation de 0,06% de stabilisants réduit fortement le taux d'acétaldéhyde (de 2,19 à 0,77 ppm) mais la présence additionnelle d'azote permet de réduire de moitié environ la quantité de stabilisants (avant dernière ligne du tableau). Le tableau montre d'ailleurs bien que l'on pourrait totalement se passer de cet ajout de stabilisants tout en restant dans les limites de taux que l'on s'est fixé.

| Injection | Débit d'azote | Température | Stabilisant | Taux d'acétaldéhyde |
|---|---|---|---|---|
| d'azote | (Nm³/h) | d'injection (°C) | (%) | (ppm) |
| Non | ---- | ---- | 0 | 2,19 |
| Non | ---- | ---- | 0,06 | 0,77 |
| Oui | 12 | 40 | 0 | 1,5 |
| Oui | 12 | 140 | 0 | 1,4 |
| Oui | 8 | 160 | 0 | 1,25 |
| Oui | 6 | 170 | 0 | 1,19 |
| Oui | 6 | 170 | 0,03 | 0,85 |

Les avantages de l'invention en terme de réduction du taux d'acétaldéhyde formé a été tout particulièrement démontré dans ce qui précède, mais il faut aussi rappeler qu'il est connu que lors de la mise en forme du polyéthylène téréphtalate dans l'air ambiant, celui-ci subit des dégradations de type thermo-oxydante. En effet, soumis à la chaleur, à des contraintes mécaniques et à la présence d'oxygène de l'air, le PET se dégrade pour former des sous-produits comme l'acétaldéhyde. Le mécanisme de formation de l'acétaldéhyde en présence d'oxygène provient de l'arrachement d'un atome d'hydrogène du groupement CH₂ du PET.

Si l'arrachement de l'atome d'hydrogène se produit sur le noyau aromatique, le radical formé sur le noyau aromatique réagit avec l'oxygène et conduit, via un mécanisme radicalaire, à la formation de sous-produits tels que le 2-hydroxy phényl ester ainsi qu'à des groupements semi-quinone et quinone.

Ces espèces sont connues pour absorber fortement la lumière ultra-violette à 340 nm pour le 2-hydroxy phényl ester et entre 400 et 450 nm pour le groupement semi-quinone et le groupement quinone. C'est l'absorption de la lumière UV dans les zones définies ci-dessus qui provoque le jaunissement du PET.

La mise en forme du PET dans une atmosphère substantiellement exempte d'oxygène conformément à la présente invention permet donc de limiter la formation de ces sous-produits responsables du jaunissement.

## Revendications

1. Procédé de production d'objets en polyéthylène téréphthalate (PET), notamment de préformes pour le conditionnement de boissons, selon lequel on dispose :
- d'une trémie (3) d'alimentation en granulés de polymère en provenance d'un sécheur,
- de moyens (1, 2) de chauffage, de déplacement, et de mise en pression du polymère, tels une vis sans fin chauffante,
- de moyens de mise en forme du polymère fondu,
et où l'on procède à l'injection d'un gaz inerte en une localisation située en une ou plusieurs des localisation suivantes :
- au niveau du sécheur ;
- au niveau de la trémie (3) ;
- en aval de la trémie (3) ; **characterisé en ce que**
le gaz est préchauffé avant son injection en ladite localisation, à une température d'au moins 170 °C.

2. Procédé de production d'objets selon la revendication 1, **caractérisé en ce que** le gaz est préchauffé dans la gamme de température allant de 170 °C à 250 °C.

3. Procédé de production d'objets selon la revendication 1 ou 2, **caractérisé en ce que** l'on procède à la dite injection de gaz dans la zone d'alimentation en polymère desdits moyens (1, 2) de chauffage, déplacement et mise en pression, i.e sensiblement dans la zone de transition entre la trémie (3) et lesdits moyens (1, 2) de chauffage, déplacement et mise en pression.

4. Procédé de production d'objets selon la revendication 1 ou 2, **caractérisé en ce que** l'on procède à la dite injection de gaz au sein même desdits moyens (1, 2) de chauffage, déplacement et mise en pression, dans la zone dite de fusion-plastification.

5. Procédé de production d'objets selon l'une des revendications précédentes, **caractérisé en ce que** ladite injection de gaz est réalisée avec un débit compris entre 5 et 20 Nm³/h.

## Claims

1. Method for producing objects of polyethylene terephthalate (PET), particularly of preforms for packaging beverages, which comprises:
- a hopper (3) for feeding polymer granules issuing from a dryer,
- polymer heating, conveying and pressurizing means (1, 2), such as a heated screw conveyor,
- means for forming the molten polymer,
and in which an inert gas is injected at a point located at one or more of the following locations;
- at the dryer;
- at the hopper (3);
- downstream of the hopper (3);
**characterized in that**
the gas is preheated, before its injection at said location, to a temperature of at least 170°C.

2. Method for producing objects according to Claim 1, **characterized in that** the gas is preheated in the temperature range from 170°C to 250°C.

3. Method for producing objects according to Claim 1 or 2, **characterized in that** said gas injection is carried out in the polymer feed zone of said heating, conveying and pressurizing means (1, 2) i.e. substantially in the transition zone between the hopper (3) and said heating, conveying and pressurizing means (1, 2).

4. Method for producing objects according to Claim 1 or 2, **characterized in that** said gas injection is carried out in said heating, conveying and pressurizing means (1, 2), in what is called the plasticizing/melting zone.

5. Method for producing objects according to one of the preceding claims, **characterized in that** said gas injection is carried out with a flow rate of between 5 and 20 Nm³/h.

## Patentansprüche

1. Verfahren zur Herstellung von Gegenständen aus Polyethylenterephthalat (PET), insbesondere von Vorformlingen zur Abfüllung von Getränken, wobei angeordnet wird:
- ein Trichter (3) zur Zufuhr von Polymergranulat, das aus einem Trockner kommt,
- Mittel (1, 2) zum Erhitzen, zum Transport und zum Ausüben von Druck auf das Polymer, wie etwa eine heizende Förderschnecke,
- Mittel zum Formen des geschmolzenen Polymers, und bei dem die Injektion eines inerten Gases an einer Stelle erfolgt, die sich an einem oder mehreren der folgenden Stellen befindet:
- in Höhe des Trockners;
- in Höhe des Trichters (3);
- stromabwärts des Trichters (3); **dadurch gekennzeichnet, dass**
das Gas vor seiner Injektion in die Stelle, auf eine Temperatur von mindestens 170 °C vorerhitzt wird.

2. Verfahren zur Herstellung von Gegenständen nach Anspruch 1, **dadurch gekennzeichnet, dass** das Gas auf einen Temperaturbereich von 170 °C bis 250 °C vorerhitzt wird.

3. Verfahren zur Herstellung von Gegenständen nach Anspruch 1 oder 2, **dadurch gekennzeichnet, dass** die Gasinjektion in die Zone der Polymerzufuhr der Mittel (1, 2) zum Erhitzen, zum Transport und zum Ausüben von Druck, d. h. im Wesentlichen in die Übergangszone zwischen dem Trichter (3) und den Mitteln (1, 2) zum Erhitzen, zum Transport und zum Ausüben von Druck erfolgt.

4. Verfahren zur Herstellung von Gegenständen nach Anspruch 1 oder 2, **dadurch gekennzeichnet, dass** die Gasinjektion in die Mittel (1, 2) zum Erhitzen, zum Transport und zum Ausüben von Druck selbst, in der so genannten Fusions/Plastifizierungszone erfolgt.

5. Verfahren zur Herstellung von Gegenständen nach einem der vorhergehenden Ansprüche, **dadurch gekennzeichnet, dass** die Gasinjektion mit einem Durchfluss im Bereich zwischen 5 und 20 Nm³/h durchgeführt wird.
